## Europäisches Patentamt

## European Patent Office

## Office européen des brevets

(19)

(11) Veröffentlichungsnummer: **0 121 173**
**B1**

(12) **EUROPÄISCHE PATENTSCHRIFT**

(45) Veröffentlichungstag der Patentschrift:
23.09.87

(51) Int. Cl.⁴: **H 02 K 15/02**

(21) Anmeldenummer: **84103014.1**

(22) Anmeldetag: **19.03.84**

(54) Verfahren zur Herstellung eines Paketes aus geschichteten Blechlamellen für elektrische Maschinen und Geräte.

(30) Priorität: 31.03.83 DE 3311852

(43) Veröffentlichungstag der Anmeldung:
10.10.84 Patentblatt 84/41

(45) Bekanntmachung des Hinweises auf die Patenterteilung:
23.09.87 Patentblatt 87/39

(84) Benannte Vertragsstaaten:
DE FR GB IT

(56) Entgegenhaltungen:
EP-A-0 100 871
CH-A-256 086
FR-A-2 342 575

PATENTS ABSTRACTS OF JAPAN, Band 8, Nr. 39,
(E-228)(1476), 21. Februar 1984

(73) Patentinhaber: Siemens Aktiengesellschaft Berlin
und München, Wittelsbacherplatz 2, D-8000
München 2 (DE)

(72) Erfinder: Diederichs, Arthur, Dr., Am Hölzlein 17,
D-8700 Würzburg 25 (DE)

### Beschreibung

Die Erfindung bezieht sich auf ein Verfahren zur Herstellung eines Paketes aus geschichteten Blechlamellen für elektrische Maschinen und Geräte gemäß Oberbegriff des Patentanspruchs 1; eine derartiges Verfahren ist aus der DE-AS 14 33 774 bekannt.

Das bekannte Verfahren zur Herstellung von Läufer- und/oder Ständerblechen elektrischer Maschinen mittels Glühbehandlung nach dem Stanzen der Bleche in einer reduzierenden Atmosphäre ist dadurch gekennzeichnet, daß die aus einem Stahlblech mit höheren elektrischen Verlusten als bei üblichen Dynamoblechen von in stanztechnischer Hinsicht günstiger Härte ausgestanzten Ständer- bzw. Läuferbleche mit Abstand untereinander, auf Dorne aufgehängt, in einem Durchlaufofen in eine reduzierende Atmosphäre von etwa 800° C gebracht, hiernach auf etwa 550 bis 650° C abgekühlt und dann aus dieser Temperatur in einer oxydierenden Gas-Atmosphäre mit einem Isolierüberzug versehen werden; anschließend werden die derart elektrisch veredelten Bleche gemäß einer vorgegebenen Blechpaket-Kenngröße, wie z. B. der Zahl der Blechlamellen pro Blechpaket, Gewicht oder Höhe des Blechpaketes geschichtet, mit planparallelen Stirnseiten zusammengedrückt und z. B. durch Nieten, Verschrauben oder Verschweißen des Blechpaketes in ihrer Lage gesichert.

As ist auch bereits bekannt (z. B. US-PS 32 02 851), die Blechlamellen beim Ausstanzen mit einander korrespondierenden Erhebungen bzw. Vertiefungen zu versehen, mittels derer die einzelnen Blechlamellen eines Paketes zu einem festen Verband zusammengedrückt werden können, indem sich die Erhebungen des einen Bleches in den Vertiefungen des anderen angedrückten Bleches jeweils gegenseitig form- und/oder kraftschlüssig verkrallen.

Weiterhin ist es bekannt (z. B. DE-GM 18 82 073), beim Schichten von Blechlamellen bei Erreichen der vorgeschriebenen Blechpakethöhe jeweils zumindest ein Blech zwischenzulegen, das statt jeder Erhebung jeweils nur ein vergrößertes Loch aufweist, so daß die diesem Zwischenblech benachbarten Bleche nicht miteinander verkrallt werden und in einer Paketiervorrichtung die Blechpakete automatisch nach Erreichen ihrer vorgeschiebenen Größe abtrennbar sind.

Aufgabe der vorliegenden Erfindung ist es, die Herstellung von Paketen aus geschichteten Blechlamellen, die nach dem Stanzen noch einer Glühbehandlung mit einer die Oberfläche der Blechlamellen bestreichenden Gasatmosphäre unterzogen werden müssen, insbesondere dahingehend zu vereinfachen, daß im Hinblick auf die Automatisierung des Herstellungsvorganges die Zahl der einzelnen Bearbeitungs- bzw. Montageschritte reduziert werden kann.

Die Lösung dieser Aufgabe ist erfindungsgemäß bei einem Verfahren der eingangs genannten Art durch die Lehre des Patentanspruchs 1 möglich; vorteilhafte Ausgestaltungen der Erfindung sind jeweils Gegenstand der Unteransprüche.

Das erfindungsgemäße Verfahren erlaubt die Verwendung des bekannten Stanz-Paketier-Verfahrens mit seiner einfachen Möglichkeit der Blechpaket-Bildung und Halterung der Blechlamellen untereinander unmittelbar nach der Stanzung der Blechlamellen, ohne daß deswegen auf die Verwendung billiger Bleche und die dadurch erforderliche Behandlung der ausgestanzten Blechlamellen in einer reduzierenden Atmosphäre, die freien Zugang zu der gesamten Oberfläche der Blechlamellen benötigt, verzichtet werden braucht; durch das Vordrücken wird nämlich einerseits bereits ein hinreichend sicherer Verbund zwischen den Blechlamellen eines Blechpaketes erreicht und andererseits kann ein hinreichend genügender Abstand zwischen den einzelnen Blechlamellen gewährleistet werden, der den sicheren Zutritt einer reduzierenden Atmosphäre zur elektrischen Veredelung der Bleche und gegebenenfalls einer zusätzlichen oxydierenden Gas-Atmosphäre für einen Isolierüberzug zuläßt. Durch das anschließende Nachdrücken wird dann das Blechpaket durch an beiden Stirnseiten andrückende, zueinander planparallel geführte Preßstempel in seine endgültige Bauform axial zusammengepreßt.

Zur einfachen Gewährleistung des Mindestabstandes zwischen den Blechlamellen beim Vordrücken ohne aufwendige Überwachungs- bzw. Steuerungsmaßnahmen eines einerseits hinreichenden andererseits jedoch nicht zu großen axialen Druckes ist nach einer Ausgestaltung der Erfindung in vorteilhafter Weise vorgesehen, daß zusätzlich solche Distanzanschläge axial in die Lamellen eingestanzt und/oder eingeprägt werden, die einerseits beim Vordrücken formbeständige Abstandssicherungen zwischen den Blechlamellen bilden, jedoch beim Enddrücken in die Ebenen ihrer jeweiligen Blechlamelle zurückformbar sind; zweckmäßigerweise bestehen dazu die Distanzanschläge aus am Außenumfang einer Blechlamelle radial innen mit der Blechlamelle zusammenhängenden und ansonsten randseitig freigestanzten und herausgebogenen Lappen. Aine Distanzsicherung mittels der Distanzanschläge ist nur dann möglich, wenn diese nicht deckungsgleich im paketierten Blechpaket übereinander liegen, sondern zweckmäßigerweise wechselweise versetzt in zwei aufeinanderfolgenden Blechlamellen eines Blechpaketes eingestanzt bzw. eingeprägt sind.

Um den Aufwand des erfindungsgemäßen Verfahrens weiter zu mindern, ist vorgesehen, daß die Blechlamellen eines Blechpaketes ohne Umschlag geschichtet werden; die sich dabei nach dem planparallelen stirnseitigen Zusammendrücken des Blechpaketes auf einer Seite dieses Paketes gegebenenfalls aufgrund unterschiedlicher Materialdicke des für die Stanzung vorgesehenen Blechstreifens ergebenen Zwischenräume werden durch Gießharz ausgefüllt. Eine derartige Ausfüllung kann bei der an sich üblichen Gießharztränkung des fertigen Blechpaketes erfolgen.

Die Erfindung sowie weitere vorteilhafte Ausgestaltungen der Erfindung werden im folgenden anhand eines schematisch dargestellten Ausführungsbeispiels in der Zeichnung näher erläutert. Darin zeigen:

Fig.1 eine Teildraufsicht auf eine erste Blechlamelle,

Fig.2 eine Teildraufsicht auf eine zweite Blechlamelle,

Fig.3 einen vergrößerten Detailausschnitt aus einem geschichteten, vorgedrückten Blechpaket,

Fig.4 einen vergrößerten Detailausschnitt aus einem geschichteten, endgedrückten Blechpaket.

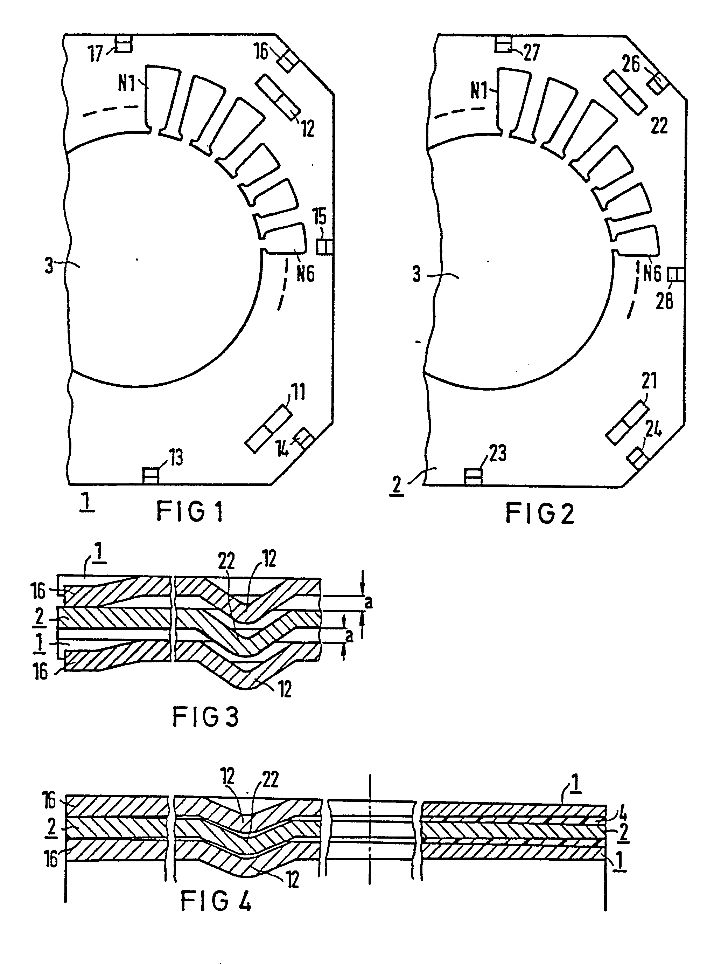

Fig.1, 2 zeigen jeweils die Draufsicht auf eine Blechlamelle 1 bzw. 2 für ein Ständerblechpaket. Über den Umfang der Bohrung 3 sind Nuten zur Aufnahme der Ständerwicklung eingestanzt, von denen hier nur die Nuten N1 bis N5 angedeutet sind.

Über den Umfang der Blechlamellen 1, 2 verteilt sind zur Bildung von Erhebungen bzw. Vertiefungen zum Zusammenfügen der Blechlamellen nach dem Stanz-Paketier-Verfahren Blechzungen 11, 12 bzw. 21, 22 eingestanzt bzw. eingeprägt. Wie insbesondere aus Fig.3, 4 ersichtlich, sind die Blechzungen 11, 12 bzw. 21, 22 an ihren Längsseiten freigestanzt, während sie an ihren kurzen Stirnseiten in der Ebene der der Blechlamellen 1 bzw. 2 einstückig mit diesen verbunden bleiben. Zusätzlich sind die Blechzungen 11, 12 bzw. 21, 22 in ihrem freigestanzten Bereich zwischen den Stirnseiten kegelförmig axial aus der Ebene der Blechlamellen 1 bzw. 2 herausgedrückt.

Beim Paketieren der einzelnen Blechlamellen zu einem Blechpaket nach Art des Stanz-Paketier-Verfahrens greift die herausgedrückte Blechzunge 12 der einen Blechlamelle 1 in die durch das Herausdrücken der Blechzunge 22 der folgenden Blechlamelle 2 entstandene schlitzförmige Öffnung ein und verkrallt sich form- und/oder kraftschlüssig mit den Seitenwänden dieser Öffnung. Die gleiche Art der Verbindung wiederholt sich - wie aus Fig.3 ersichtlichdurch Verkrallen der Spitze der Blechzunge 22 der Blechlamelle 2 durch Eingreifen in die Öffnung der darunterliegenden Blechlamelle, die identisch zu der Blechlamelle 1 ausgebildet ist.

Fig.3 zeigt einen Ausschnitt aus einem Blechpaket, dessen Blechlamellen 1, 2, 1 durch Vordrücken bis auf einen gegenseitigen Mindestabstand a zusammengefügt sind und das in diesem Zustand als Verband in einen Glühofen zur Behandlung in einer reduzierenden Gas-Atmospähre gebracht werden kann. Zur einfachen Sicherstellung des Mindestabstandes a sind als Distanzanschläge am Außenumfang jeder Blechlamelle 1 bzw. 2 radial innen mit der Blechlamelle zusammenhängende und ansonsten randseitig freigestanzte und axial herausgebogene Lappen 13-17 bzw. 23-27 angeordnet. Die Lappen 13-17 der Blechlamelle 1 sind gegenüber den Lappen 23-27 der im Blechpaket nächstfolgende Blechlamelle 2 am Umfang derart versetzt, daß - wie aus Fig.3 ersichtlich - jeweils die randseitig aus der Ebene der Blechlamellen axial herausgebogenen Teile der Distanzanschläge nur auf einem ebenen, nicht herausgebogenen Teil der nächstfolgenden Blechlamelle zur Auflage kommen können.

Fig.4 zeigt den vorgedrückten Verband des Blechpaketes gemäß Fig.3 nach dem Enddrücken. Beim Enddrücken wird der Druck einer an beiden Stirnseiten des Blechpaketes planparallel zueinander pressenden Druckvorrichtung soweit erhöht, daß sich die herausgebogenen Lappen 13-17 bzw. 23-27 in die Ebene ihrer Blechlamelle 1 bis 2 zurückbiegen.

Da die Blechbänder bzw. Blechtafeln, aus denen die Blechlamellen 1, 2 ausgestanzt werden, u.U. nicht über ihre gesamte Breite die gleiche Materialdicke aufweisen und andererseits nach einer Ausgestaltung der Erfindung zur Vereinfachung des Stanzpaketierens die Blechlamellen eines Blechpaketes ohne Umschlag geschichtet werden, kann es vorkommen, daß - wie in Fig. 4 im rechten Teil des Schnittbildes dargestellt - zwischen den Blechlamellen Zwischenräume entstehen, während an der linken Außenseite des Blechpaketes die Blechlamellen dicht aneinander liegen. Nach einer Ausgestaltung der Erfindung ist vorgesehen, daß das derart in einfachster Weise geglühte und stanzpaketierte Blechpaket einer Tränkung mit aushärtendem Gießharz unterzogen wird, so daß sich die Zwischenräume mit Gießharz ausfüllen und eine feste Gießharz-Zwischenschicht 4 zwischen den Blechlamellen entsteht. Auf diese Art und Weise wird trotz einfachster Herstellung und gewährleisteter Planparallelität der Stirnseiten des Blechpaketes der feste Verband auch unter dem Druck der bei der Endmontage des Motors axial gegengespannten Lagerschilde zusätzlich gesichert.

**Patentansprüche**

1. Verfahren zur Herstellung eines Paketes aus geschichteten Blechlamellen (1, 2) für elektrische Maschinen und Geräte, bei dem die Blechlamellen nach dem Ausstanzen, in gegenseitigem Abstand zueinander angeordnet, in einer Glühbehandlung einer reduzierenden Gas-Atmosphäre ausgesetzt und anschließend zu der endgültigen Blechpaket-Form zusammengefügt werden, dadurch gekennzeichnet, daß zur gegenseitigen Verbindung der zu einem Blechpaket zusammenzufügenden Blechlamellen in diese nach Art des Stanz-Paketier-Verfahrens bekannte, einander korrespondierende Erhebungen bzw. Vertiefungen (11, 12) eingestanzt bzw. eingeprägt und die Blechlamellen eines Blechpaketes mittels der ineinandergreifenden Erhebungen bzw. Vertiefungen vor dem Glühen durch axiales Vordrücken zu einem Verband mit gewährleistetem axialen gegenseitigen Mindestabstand (a) und nach der Glühbehandlung durch axiales Enddrücken zu der endgültigen Blechpaket-Form zusammengefügt werden.

2. Verfahren nach Anspruch 1, dadurch gekennzeichnet, daß zusätzlich solche Distanzanschläge (13-17; 23-27) in die Blechlamellen (1, 2) eingestanzt und/oder eingeprägt werden, die einerseits beim Vordrücken eine formbeständige Abstandssicherung zwischen den Blechlamellen bilden jedoch andererseits beim Enddrücken in die Ebene ihrer jeweiligen Blechlamelle zurückformbar sind.

3. Verfahren nach Anspruch 2, dadurch gekennzeichnet, daß die Distanzanschläge (13-17; 23-27) aufeinanderfolgender Blechlamellen (1, 2) eines Blechpaketes gegeneinander, insbesondere wechselweise, versetzt angeordnet werden.

4. Verfahren nach Anspruch 2 oder 3, dadurch gekennzeichnet, daß als Distanzanschläge (13-17; 23-27) am Außenumfang einer Blechlamelle (1, 2) radial innen mit der Blechlamelle zusammenhängende und ansonsten randseitig freigestanzte und herausgebogene Lappen verwendet werden.

5. Verfahren nach einem der Ansprüche 1 bis 4, dadurch gekennzeichnet, daß die Blechlamellen (1, 2) eines Blechpaketes ohne Umschlag geschichtet sind.

6. Verfahren nach einem der Ansprüche 1 bis 5, insbesondere nach Anspruch 4, dadurch gekennzeichnet, daß das fertiggeschichtete und mit planparallelen Stirnseiten gedrückte Blechpaket einer Tränkung mit aushärtendem Gießharz (4) unterzogen wird.

## Claims

1. A method of producing a stack of laminated plates (1, 2) for electrical machines and devices, in which, after having been punched out, the laminated plates are arranged so as to be spaced from one another, are exposed to a reducing gas atmosphere in an annealing treatment, and are then assembled to form the final stack, characterised in that in order to mutually connect the laminated plates which are to be assembled to form a stack, raised portions or recesses (11, 12) as the case may be, which correspond to one another and which are known in the punch-stacking process art, are punched or impressed into the laminated plates; and that by means of the interlocking raised portions and recesses, the laminated plates of a stack are subjected to a preliminary axial compression prior to the annealing treatment to form a structure having a guaranteed minimum, mutual, axial spacing (a) and, after the annealing treatment, are subjected to a final axial compression to form the final stack.

2. A method as claimed in Claim 1, characterised in that spacing stop means (13 - 17; 23 - 27) are additionally punched and/or impressed into the laminated plates (1, 2), said spacing stop means, on the one hand, ensuring a dimensionally stable spacing between the laminated plates during the preliminary compression but, on the other hand, being able to return to the plane of their respective laminated plates during the final compression.

3. A method as claimed in Claim 2, characterised in that the spacing stop means (13 - 17; 23 - 27) of successive laminated plates (1, 2) of a stack are arranged so as to be offset relative to one another, particularly but not exclusively, alternately.

4. A method as claimed in Claim 2 or 3, characterised in that as the spacing stop means (13 - 17; 23 - 27), tabs which are radially internally joined to the laminated plate at the outer periphery of a laminated plate (1, 2) but otherwise at their edges are punched out and bent outwardly.

5. A method as claimed in one of Claims 1 to 4, characterised in that the laminated plates (1, 2) of a stack are stacked without a wrapping.

6. A method as claimed in one of Claims 1 to 5, in particular Claim 4, characterised in that the stack of plates which has been finally stacked and compressed with plane-parallel end faces is saturated with hardening casting resin (4).

## Revendications

1. Procédé pour la réalisation d'un paquet constitué de lamelles de tôles empilées (1, 2) pour des machines et des appareils électriques, dans lequel les lamelles de tôles sont exposées, après estampage et agencement entre elles avec une distance mutuelle, à un traitement de recuit dans une atmosphère gazeuse réductrice, pour ensuite être assemblées sous la forme définitive d'un paquet de tôles, caractérisé par le fait que pour relier entre elles des lamelles de tôles à assembler en un paquet de tôles, on réalise dans celles-ci et selon le procédé connu d'estampage et de mise en paquet, des bosses ou des creux (11, 12) par estampage ou par empreintes, qui sont connus, et qui se correspondent, et à assembler les lamelles de tôles d'un paquet de tôles à l'aide des bosses et des creux qui s'interpénètrent, avant le recuit et par une pression axiale préalable en un assemblage avec un écart axial mutuel minimum a entre les lamelles de tôles, après quoi, et à la suite du traitement de recuit, les lamelles sont assemblées à l'aide d'une pression axiale finale pour leur conférer la forme définitive du paquet de tôles.

2. Procédé selon la revendication 1, caractérisé par des butées-entretoises supplémentaires (13-17; 23-27) réalisées dans les lamelles de tôles par estampage et/ou par empreintes et qui sont telles qu'elles constituent, lors de l'application de la pression préalable, une sécurité indéformable de la distance entre les tôles, mais sont, par ailleurs, susceptibles d'être déformées en retour pour se situer à nouveau dans le plan de leur lamelle de tôle respective.

3. Procédé selon la revendication 2, caractérisé par le fait que les butées-entretoises (13-17; 23-27) des lamelles de tôles (1, 2) qui se suivent dans un paquet de tôles, sont disposées avec décalage, de préférence alterné, l'une par rapport à l'autre.

4. Procédé selon la revendication 2 ou 3, caractérisé par le fait que l'on utilise comme butées-entretoises (13-17; 23-27), à la périphérie extérieure d'une lamelle de tôle (1, 2), des pattes venues d'une seule pièce avec la lamelle de tôle dans la partie radialement intérieure, lesdites pattes étant dégagées par estampage du côté du bord et étant repliées.

5. Procédé selon l'une des revendications 1 à 4, caractérisé par le fait que les lamelles de tôles (1, 2) d'un paquet de tôles sont empilées sans enveloppe.

6. Procédé selon l'une des revendications 1 à 5, en particulier selon la revendication 4, caractérisé par le fait que le paquet de tôles empilées et comprimé avec des côtés frontaux plans et parallèles, est soumis à une imprégnation avec une résine coulable (4), susceptible de durcir.

FIG 1

FIG 2

FIG 3

FIG 4